# EUROPÄISCHE PATENTSCHRIFT

(11) **EP 2 112 021 B1**
(45) Veröffentlichungstag und Bekanntmachung des Hinweises auf die Patenterteilung: **02.03.2011**
(21) Anmeldenummer: 08103723.6
(22) Anmeldetag: 25.04.2008
(51) Int. Cl.: B60Q 1/076

(54) **Scheinwerfer für Fahrzeuge**
Headlamp for vehicles
Phare pour véhicules

(43) Veröffentlichungstag der Anmeldung: 28.10.2009
(73) Patentinhaber: Hella KGaA Hueck & Co., 59552 Lippstadt (DE)
(72) Erfinder: Willeke, Franz-Georg, 59609 Anröchte (DE)

(56) Entgegenhaltungen:
- EP-A- 1 391 347
- DE-A1-102004 001 567
- DE-A1-102005 038 829

## Beschreibung

Die Erfindung betrifft einen Scheinwerfer für Kraftfahrzeuge nach dem Oberbegriff des Patentanspruchs 1.

Aus der DE 10 2005 038 829 A1 ist ein Scheinwerfer für Kraftfahrzeuge mit einem Gehäuse bekannt, in dem ein Lichtmodul mittels einer ersten Einstellvorrichtung manuell betätigbar und mittels einer zweiten Einstellvorrichtung elektrisch betätigbar zur Verstellung um eine horizontale Achse ist. Eine axialfeste Verstellhülse wirkt mit einem axial verschiebbaren Verstellbolzen zusammen, so dass bei manuell betätigbarer Verdrehung der Verstellhülse das mit dem Verstellbolzen verbundene Lichtmodul linear verstellbar ist. Nachteilig ist, dass nicht nur der Verstellbolzen, sondern der fest mit dem Verstellbolzen verbundene Elektromotor linear verschoben wird.

Aus der EP 0 985 577 B1 ist ein Scheinwerfer für Kraftfahrzeuge bekannt, der zum einen eine manuell betätigbare erste Einstellvorrichtung zur Grundeinstellung desselben und zum anderen eine elektrisch betätigbare zweite Einstellvorrichtung zur Grundeinstellung desselben umfasst. Ein Reflektor des Scheinwerfers ist mit einem Kopf eines axial verschiebbaren Verstellbolzens verbunden, wobei der Verstellbolzen über ein Gewinde mit einer drehbaren Abtriebswelle eines Elektromotors der zweiten Einstellvorrichtung verbunden ist. Die erste Einstellvorrichtung umfasst ein koaxial zu der Achse des Verstellbolzens angeordnetes Zahnrad, das mit einer Verstellhülse verbunden ist. Auf einer dem Reflektor zugewandten Seite der Verstellhülse weist diese Federelemente auf, über die die Verstellhülse drehfest mit dem Verstellbolzen verbunden ist. Das Zahnrad ist mit einem Werkzeug in Eingriff bringbar, so dass durch Verdrehung des Zahnrades bzw. der Verstellhülse ein Verdrehmoment an den Verstellbolzen übertragen werden kann, der sich - da die Verstellhülse axialfest angeordnet ist - in einer axialen Verstellrichtung verschieben kann. Die endseitigen Federelemente der Verstellhülse sind elastisch ausgebildet, so dass eine Auskupplung der Verstellhülse bei zu hoher Beanspruchung des Verstellbolzens erfolgen kann. Nachteilig an dem bekannten Scheinwerfer ist, dass die Einstellvorrichtungen lediglich dazu geeignet sind, ein einziges Lichtmodul zu verstellen. Weiterhin ist es erforderlich, dass die mit dem Reflektor (Lichtmodul) gekoppelte Kugel des Verstellbolzens drehbar in einer Aufnahme des Reflektors gelagert sein muss, da der Verstellbolzen nur durch Drehen in Umfangsrichtung in Verstellrichtung bewegbar ist.

Aus der DE 102 38 792 A1 ist ein Scheinwerfer für Kraftfahrzeuge mit einem Gehäuse bekannt, in dem ein erstes Lichtmodul und ein zweite Lichtmodul integriert angeordnet sind. Das erste Lichtmodul und das zweite Lichtmodul sind mittels einer manuell betätigbaren ersten Einstellvorrichtung zur Grundeinstellung derselben um eine horizontale Achse verstellbar, wobei ein Werkzeug an einem koaxial zu einer Verstellrichtung angeordneten Zahnrad angreift. Das Zahnrad ist in einem rückwärtigen Bereich des ersten Lichtmoduls angeordnet und ist derart mit dem ersten Lichtmodul gekoppelt, dass ein Verdrehen des Zahnrades ein Verschwenken des ersten Lichtmoduls bewirkt. Eine Koppelstange ist zwischen dem ersten Lichtmodul und dem zweiten Lichtmodul derart angeordnet, dass die Schwenkbewegung des ersten Lichtmoduls auf eine Schwenkbewegung des zweiten Lichtmoduls übertragen wird. Zum Verschwenken ausschließlich des ersten Lichtmoduls weist die zweite ortsfern angeordnete Einstellvorrichtung einen Elektromotor mit einer Abtriebswelle auf., wobei sie ortsfern von der ersten Einstellvorrichtung angeordnet ist und an einem unteren Angriffspunkt des ersten Lichtmoduls angesetzt ist. Nachteilig an dem bekannten Scheinwerfer ist, dass zur gemeinsamen manuell betätigbaren Verstellung des ersten Lichtmoduls und des zweiten Lichtmoduls und zur ausschließlich elektrisch betätigbaren Verstellung des ersten Lichtmoduls in unterschiedlicher Höhe angeordnete Verstelleinrichtungen vorgesehen sein müssen.

Aufgabe der vorliegenden Erfindung ist es einen Scheinwerfer für Kraftfahrzeuge derart weiterzubilden, dass die manuell betätigbare Verstellung eines ersten Lichtmoduls und eines zweiten Lichtmoduls und die elektrisch betätigbare Verstellung des ersten Lichtmoduls auf einfache Weise Platz sparender ermöglicht wird.

Zur Lösung dieser Aufgabe weist die Erfindung die Merkmale des Patentanspruchs 1 auf.

Der besondere Vorteil der Erfindung besteht darin, dass in einem Einstellort die mechanische Verstellung (zur Grundeinstellung) eines ersten Lichtmoduls und eines zweiten Lichtmoduls einerseits und die elektrische Verstellung lediglich des ersten Lichtmoduls andererseits ermöglicht wird, ohne dass das zweite Lichtmodul bei elektrischer Verstellung mitverstellt wird. Es kann somit allein das erste Lichtmodul dynamisch mittels der elektrisch betätigbaren Einstellvorrichtung verstellt werden. Vorteilhaft kann der Verfahrweg bei der Verstellung des zweiten Lichtmoduls verringert werden. Darüber hinaus verringert sich der Kraftaufwand für den Elektromotor bei Verstellung des ersten Lichtmoduls. Nach der Erfindung dient eine Verstellhülse zum einen zur Vermittlung der mechanisch eingebrachten Verstellkraft auf einen mit dem ersten Lichtmodul gekoppelten Verstellbolzen und zum anderen zur Vermittlung der von einem Abtriebselement eingebrachten elektrischen Verstellkraft zu demselben Verstellbolzen. Die zumindest aus der Verstellhülse, einem zur Vermittlung der Verstellkraft an das zweite Lichtmodul vorgesehene Verstellschlitten, dem Verstellbolzen und einem Elektromotor gebildete Baugruppe kann als vormontierte Baugruppe dem Montageprozess des Scheinwerfers bereitgestellt werden. Hierdurch können die Montagekosten reduziert werden.

Nach einer bevorzugten Ausführungsform der Erfindung weist eine Innenseite der Verstellhülse eine Profilierung auf, so dass vorzugsweise ein koaxial in der Verstellhülse angeordneter Verstellbolzen in Umfangsrichtung formschlüssig und in Axialrichtung bewegbar angeordnet ist. Vorteilhaft wird hierdurch eine unabhängige Beaufschlagung des Verstellbolzens ermöglicht, wobei bei mechanischer Beaufschlagung des Verstellbolzens derselbe verdreht und bei elektrischer Beaufschlagung des Verstellbolzens derselbe linear verschoben wird.

Nach einer Weiterbildung der Erfindung ist der Verstellbolzen über einen Gewindeeingriff mit einem unmittelbar an dem ersten Lichtmodul angreifenden Gelenkelement verbunden, so dass die Drehbewegung des Verstellbolzens bei manuell betätigbarer Verstellung in eine Linearbewegung - wie bei der elektrisch betätigbaren Verstellung - umgewandelt wird. Sowohl bei manueller Verstellung als auch bei elektrischer Verstellung wirkt somit die Verstellkraft in einer gemeinsamen linearen Richtung auf das erste Lichtmodul, wobei die Verstellkraft in das gleiche Gelenkelement eingeleitet wird.

Nach einer Weiterbildung der Erfindung weist die Verstellhülse an mindestens einem stirnseitigen Ende einen Anschlag auf zur Begrenzung des Verstellweges des Versstellschlittens. Hierdurch wird ein maximaler Verstellweg begrenzt.

Nach einer Weiterbildung der Erfindung ist auf einem dem Zahnrad zugewandten Ende der Verstellhülse eine Rutschkupplung angeordnet, so dass eine Zerstörung eines dem Elektromotor zugewandten Getriebes verhindert wird. Vorzugsweise weist die Rutschkupplung federnde Ausleger auf, die in Umfangsrichtung verteilt um einen Rand der Verstellhülse angeformt sind und die in korrespondierende Ausbuchtungen des Zahnrades eingreifen.

Nach einer Weiterbildung der Erfindung sind an der Verstellhülse Federelemente angeformt, so dass die Toleranzen beim Verstellen in axialer Verstellrichtung verringert werden können.

Nach einer Weiterbildung der Erfindung umgreift das Zahnrad und/oder die Verstellhülse in der Montagestellung eine federnde Pfanne des Verstellbolzens, der einen Kopf des Abtriebselements des Elektromotors aufnimmt, derart, dass ein unerwünschtes selbsttätiges Lösen der Verbindung zwischen der Pfanne und dem Kopf verhindert wird. Vorteilhaft ist der Verstellbolzen somit klemmend mit dem Abtriebselement des Elektromotors gehalten, wobei durch die Integration eines Gewindeschaftes in den Verstellbolzen eine Längsverschieblichkeit des Verstellbolzens gewährleistet ist.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Fig. 1: eine perspektivische Rückansicht eines Scheinwerfers mit einem ersten Lichtmodul und einem zweiten Lichtmodul, mit einer zwischen der ersten Einstellvorrichtung und dem zweiten Lichtmodul verlaufenden Koppelstan- ge sowie einer der ersten Lichteinheit zugeordneten ersten Einstellvorrich- tung und zweiten Einstellvorrichtung,

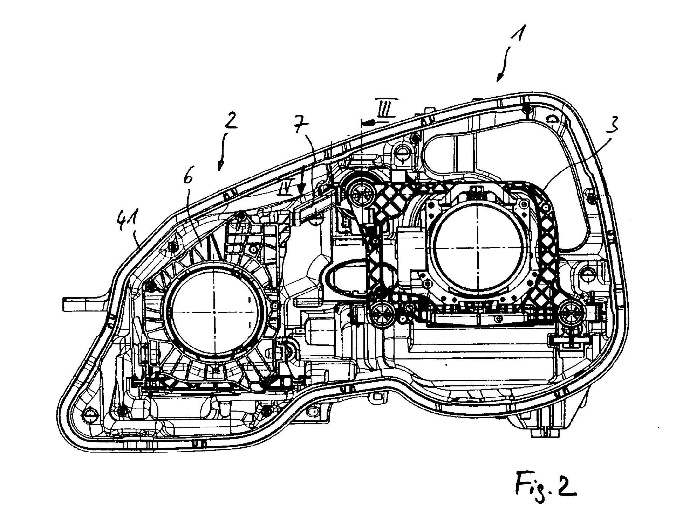

- Fig. 2: eine Vorderansicht des Scheinwerfers mit einem Gehäuse,
- Fig. 3a: einen Vertikalschnitt durch die erste und zweite Einstellvorrichtung in einer Nullstellung eines Verstellbolzens der Einstellvorrichtungen entlang der Schnittlinie III-III gemäß Figur 2,
- Fig. 3b: einen Vertikalschnitt durch die erste und zweite Einstellvorrichtung in einer maximalen Ausfahrstellung eines Verstellbolzens der Einstellvorrichtungen entlang der Schnittlinie III-III gemäß Figur 2,

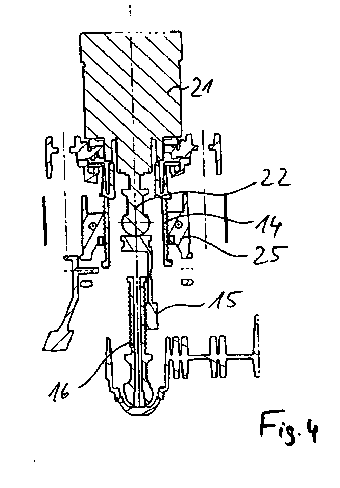

- Fig. 4: einen Horizontalschnitt durch die Einstellvorrichtungen entlang der Linie IV-IV in Figur 2,

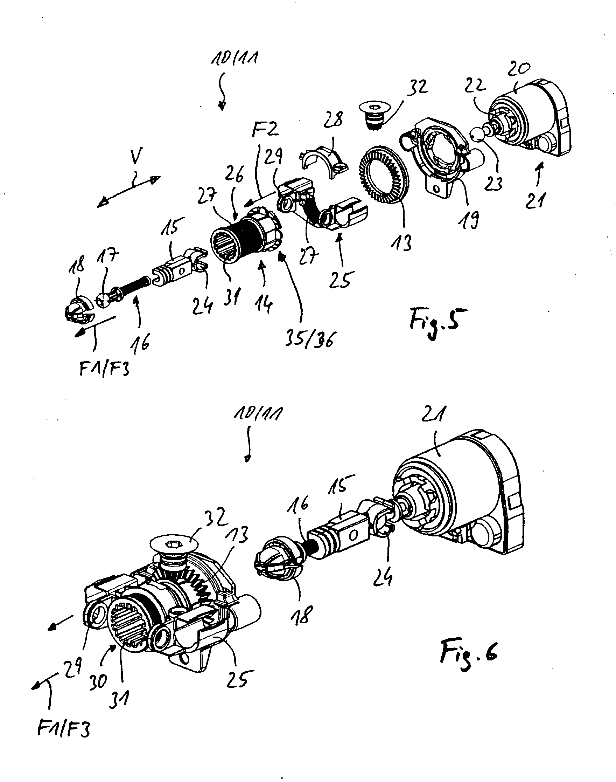

- Fig. 5: eine Explosionsdarstellung einer Baueinheit der Verstelleinrichtungen nach einer ersten Ausführungsform,
- Fig. 6: eine perspektivische Vorderansicht der Einstellvorrichtungen in einem aus der Verstellhülse herausgeschobenen Zustand eines Verstellbolzens ge- mäß der ersten Ausführungsform und
- Fig. 7: eine perspektivische Seitenansicht einer ersten und zweiten Einstellvor- richtung nach einer zweiten Ausführungsform, die lediglich einem einzigen Lichtmodul zugeordnet ist.

Ein Scheinwerfer für Fahrzeuge weist ein Gehäuse 41 auf, in dem ein erstes Lichtmodul 1 zur Erzeugung einer Abblendlichtverteilung und ein zweites Lichtmodul 2 zur Erzeugung einer Fernlichtverteilung angeordnet sind. Das erste Lichtmodul 1 weist einen Tragrahmen 3 auf, an dem ein Reflektor 4 und gegebenenfalls weitere Bauteile befestigt sind. Das zweite Lichtmodul 2 weist einen Tragrahmen 5 auf, an dem ein Reflektor 6 und gegebenenfalls weitere Bauteile befestigt sind. Die Tragrahmen 3, 5 sind jeweils an dem Gehäuse 41 des Scheinwerfers befestigt.

Dem ersten Lichtmodul 1 ist eine manuell betätigbare erste Einstellvorrichtung 10 und eine elektrisch betätigbare zweite Einstellvorrichtung 11 zugeordnet, die jeweils in einem oberen Eckbereich des Tragrahmens 3 in Lichtabstrahlrichtung 12 hinter dem Tragrahmen 3 angeordnet sind. Die mechanische erste Einstellvorrichtung 10 dient zur Grundeinstellung des ersten Lichtmoduls 1 und des zweiten Lichtmoduls 2 um eine horizontale Achse. Die zweite Einstellvorrichtung 11 dient zur dynamischen Einstellung ausschließlich des ersten Lichtmoduls 1 um die horizontale Achse, so dass in Abhängigkeit von der aktuellen Fahrsituation das erste Lichtmodul 1 zu dem Fahrzeugvorfeld in vorgegebener Weise ausgerichtet wird. Darüber hinaus dient die zweite Einstellvorrichtung 11 zur statischen Einstellung des ersten Lichtmoduls 1 beispielsweise mittels eines im Kraftfahrzeuginnenraum angeordneten Schalters, so dass das vom Lichtmodul 1 abgestrahlte Lichtbündel in Abhängigkeit von dem Ladezustand des Kraftfahrzeugs veränderbar ist.

Die erste Einstellvorrichtung 10 umfasst im Wesentlichen ein mit einem Werkzeug koppelbares Zahnrad 13, einer sich an eine Vorderseite anschließenden Verstellhülse 14, einem im Wesentlichen innerhalb der Verstellhülse 14 gelagerten Verstellbolzen 15 mit einem Gewindeschaft 16, der über einen Kopf 17 in einem drehfest mit dem ersten Lichtmodul 1 verbundenen Gelenkelement 18 verbunden ist.

Ein Verstellschlitten 25 der ersten Einstellvorrichtung 10 ist mit dem Tragrahmen 5 des zweiten Lichtmoduls 2 über eine Koppelstange 7 (Koppelelement) verbunden, so dass bei Verschwenken des ersten Lichtmoduls 1 um eine horizontale Achse das zweite Lichtmodul 2 vorzugsweise um die gleiche horizontale Achse mitverschwenkt wird. Der Tragrahmen 3 des ersten Lichtmoduls ist über Gelenkpunkte 8 mit dem Gehäuse 41 verbunden. Der Tragrahmen 2 ist über zwei Gelenkpunkte 9 mit dem Gehäuse verbunden.

Die Verstellhülse 14 und/oder das Zahnrad 13 sind an einem ringförmigen Träger 19 gelagert, der zugleich zur Aufnahme einer Zylinderumfangsfläche 20 eines Elektromotors 21 dient. Der ringförmige Träger 19, das Zahnrad 13 und die Verstellhülse 14 sind koaxial zueinander angeordnet.

Die zweite Einstellvorrichtung 11 umfasst den Elektromotor 21, der vorzugsweise als Schrittmotor ausgebildet ist und mit dem über ein nicht dargestelltes Getriebe ein Abtriebelement 22 mit einem endseitigen Kopf 23 verbunden ist, wobei das stangenförmige Abtriebelement 22 bei Betätigung des Elektromotors 21 in eine Verstellrichtung V (Axialrichtung) bewegbar ist. Der Kopf 23 des Abtriebelementes 22 ist in einer rückseitigen Pfannenaufnahme 24 des Verstellbolzens 15 axialfest gelagert.

Die erste Einstellvorrichtung 10 umfasst ferner einen Verstellschlitten 25, der an einer Außenseite 26 der Verstellhülse 14 angesetzt ist und derart formschlüssig mit der Verstellhülse 14 verbunden ist, dass er bei Verdrehen der drehfest gelagerten Verstellhülse 14 in Umfangsrichtung verdreht und in Verstellrichtung V bewegt wird. Im vorliegenden Ausführungsbeispiel weist der Verstellschlitten 24 an einer Innenseite und die Verstellhülse 14 an der Außenseite 26 ein Gewinde 27 auf, so dass sich die Verstellhülse 14 in einem Gewindeeingriff mit dem Verstellschlitten 25 befindet. Der Verstellschlitten 25 ist im Querschnitt halbkreisförmig ausgebildet. Damit der Verstellschlitten 25 sicher im Gewindeeingriff mit der Verstellhülse 14 steht, ist eine Schelle 28 vorgesehen, die in der Montagestellung an dem Verstellschlitten 25 befestigt ist. In der Montagestellung umgreifen der Verstellschlitten 25 und die Schelle 28 die Verstellhülse 14.

Der Verstellschlitten 25 weist auf einer Randseite eine Lageröffnung 29 auf, so dass eine gelenkige Verbindung (Gelenk) zu einem Ende der Koppelstange 7 besteht.

Die Verstellhülse 14 ist - wie das Zahnrad 13 - in Umfangsrichtung drehbar und axialfest gelagert.

Der Verstellbolzen 15 ist im Querschnitt rechteckförmig (viereckförmig) ausgebildet und wirkt mit einer an einer Innenseite 30 der Verstellhülse 14 ausgebildeten Profilierung 31 derart zusammen, dass der Verstellbolzen 15 drehfest und axial verschiebbar innerhalb der Verstellhülse 14 angeordnet ist. Die Profilierung 31 ist aus einer Mehrzahl von in Axialrichtung (Verstellrichtung V) verlaufenden Profilierungselementen gebildet, wobei sich benachbarte Profilierungselemente in Umfangsrichtung unmittelbar anschließen. Die Profilierung 31 bildet einen Zahnkranz, in dem der Verstellbolzen 15 in Verstellrichtung V mit Spiel gelagert sein kann. Die Profilierungselemente der Profilierung 31 können im Querschnitt eben oder bogenförmig verlaufen.

Der Verstellbolzen 15 weist eine Gewindeaufnahme auf, so dass der Verstellbolzen 15 über einen Gewindeeingriff mit dem Gewindeschaft 16 verbunden, so dass die Drehbewegung des Verstellbolzens 15 in eine Linearbewegung des Gewindeschaftes 16 umgewandelt wird. Da der Gewindeschaft 16 über den Kopf 17 an dem Gelenkelement 18 des ersten Lichtmoduls 1 axialfest gekoppelt ist, kann somit eine lineare erste Verstellkraft F1 auf das erste Lichtmodul 1 übertragen werden. Hierbei wird ein Drehmoment eines Ritzels 32, an dem das nicht dargestellte Werkzeug angreift, auf das Zahnrad 13 übertragen, das zusammen mit dem Ritzel 32 ein Kegelradpaar bildet. Die Drehbewegung des Zahnrades 13 wird auf die axialfeste Verstellhülse 14 übertragen, wobei mittels der Profilierung 31 die Drehbewegung auf den Verstellbolzen 15 übertragen wird.

Eine zweite lineare Verstellkraft F2 wird bei Betätigung der manuellen ersten Einstellvorrichtung 10 auf den Verstellschlitten 25 ausgeübt, wobei die Drehmomentübertragung über den außenseitigen Gewindeeingriff der Verstellhülse 14 auf den Verstellschlitten 25 übertragen wird. Durch die lineare Verschiebung des Verstellschlittens 25 wird die Koppelstange 7 entsprechend verschoben, so dass das zweite Lichtmodul 2 um die horizontale Drehachse verschwenkbar ist. Die Verschwenkung des ersten Lichtmoduls 1 und des zweiten Lichtmoduls 2 mittels Betätigung der ersten Einstellvorrichtung 10 erfolgt somit synchron.

Bei Betätigung der zweiten Einstellvorrichtung 11 wird ausschließlich eine dritte lineare Verstellkraft F3 auf den Verstellbolzen 15 ausgeübt, ohne dass der Verstellschlitten 25 verschoben wird. Dies wird ermöglicht durch die axialverschiebliche Lagerung des Verstellbolzens 15 in der Verstellhülse 14 sowie der axialfesten Verbindung zwischen der Pfannenaufnahme 24 des Verstellbolzens 15 und dem Kopf 23 des Abtriebelementes 22.

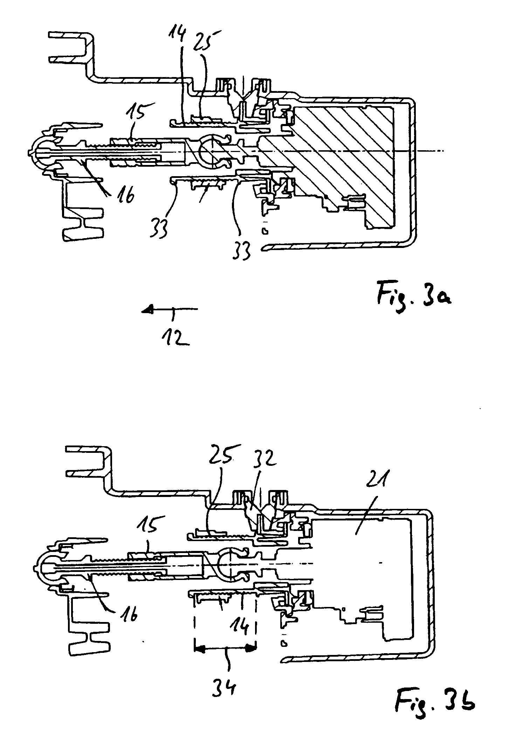

In den Figuren 3a und 3b sind die Stellungen des Verstellbolzens 15 und des Verstellschlittens 25 bei Betätigung der ersten Einstellvorrichtung 10 dargestellt. Zur Begrenzung der in Figur 3b dargestellten maximalen Ausfahrstellung weist die Verstellhülse 14 an gegenüberliegenden stirnseitigen Endbereichen jeweils einen radial nach außen abragenden Anschlag 33 auf, gegen den eine Stirnseite des Verstellschlittens 25 anschlägt. Der Abstand der Anschläge 33 zueinander legt die Länge des Verstellweges 34 fest.

Die Verstellhülse 14 ist auf einer dem Zahnrad 13 zugewandten Seite über eine Rutschkupplung 35 mit demselben verbunden. Die Verstellhülse 14 weist zu diesem Zweck in Umfangsrichtung an einem rückseitigen Rand verteilt angeordnete federnde Ausleger 36 auf, die in Ausbuchtungen des Zahnrades 13 greifen. Vorteilhaft wird hierdurch eine Überdrehsicherung des Verstellschlittens 25 geschaffen.

Um Toleranzen in Verstellrichtung V zu verringern, weist die Verstellhülse 14 Federelemente auf, die die Verstellhülse 14 über das Zahnrad 13 an dem Träger 19 abstützen.

Zur Verringerung der Toleranzen in radialer Richtung sind Führungen des Verstellschlittens 25 mit federnden Elementen versehen, die sich an eine Führung des Gehäuses abstützen.

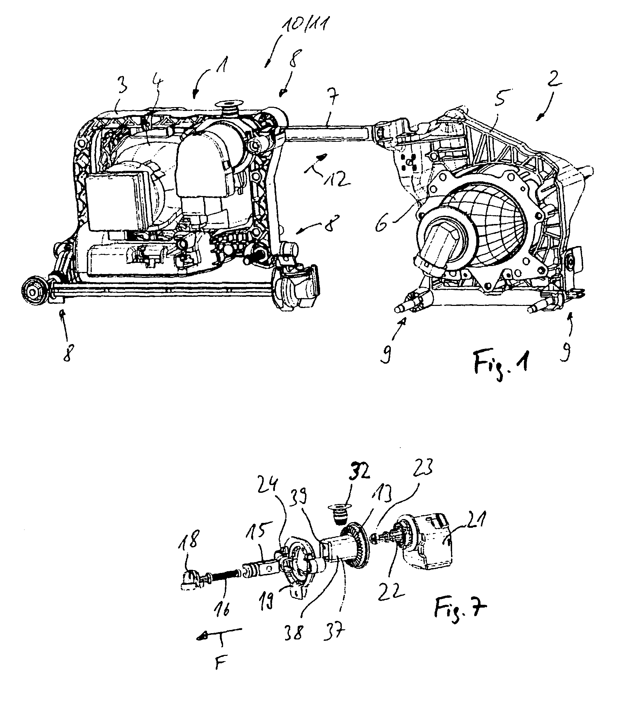

Nach einer zweiten Ausführungsform der Erfindung gemäß Figur 7 ist im Unterschied zu dem vorhergehenden Ausführungsbeispiel eine Verstellhülse 37 vorgesehen, die im Querschnitt viereckförmig ausgebildet ist, wobei mittels der ersten Einstellvorrichtung 10 und der zweiten Einstellvorrichtung 11 lediglich das erste Lichtmodul 1 verstellbar ist. Eine Koppelstange 7 zur Kopplung mit dem zweiten Lichtmodul 2 ist hierbei nicht vorgesehen. Sowohl eine Außenseite 38 als auch eine Innenseite 39 der Verstellhülse 37 sind im Querschnitt rechteckförmig ausgebildet. Das Profil der Verstellhülse 37 korrespondiert somit zum Profil des Verstellbolzens 15, der in der Verstellhülse 37 axial verschieblich, aber drehfest gelagert ist. Die Verstellhülse 37 ist einstückig mit dem Zahnrad 13 verbunden.

In der Montagestellung umgreift das Zahnrad 13 und/oder die Verstellhülse 14, 37 die den Kopf 23 des Abtriebselements 22 aufnehmende federnde Pfanne 24 der Gewindeaufnahme des Verstellbolzens 15 so, dass ein zwischen der Verbindung zwischen dem Kopf 23 und der Pfanne 24 verhindert wird. Erst durch Abziehen des Zahnrades 13 bzw. der Verstellhülse 14, 37 wird ein Raum in radialer Richtung geschaffen, dass der Kopf 23 unter Spreizung der federnden Pfanne 24 aus derselben herausgezogen werden kann. Zur Montage des Kopfes 23 und der Pfanne 24 wird derselbe rastend durch die federnde Pfanne 24 erfasst.

Gleiche Bauteile bzw. Bauteilfunktionen der beiden Ausführungsbeispiele sind mit den gleichen Bezugsziffern versehen.

### Bezugszeichenliste

- 1: erste Lichtmodul
- 2: zweite Lichtmodul
- 3: Tragrahmen
- 4: Reflektor
- 5: Tragrahmen
- 6: Reflektor
- 7: Koppelstange
- 8: Gelenkpunkte
- 9: Gelenkpunkte
- 10: erste Einstellvorrichtung
- 11: zweite Einstellvorrichtung
- 12: Lichtabstrahlrichtung
- 13: Zahnrad
- 14: Verstellhülse
- 15: Verstellbolzen
- 16: Gewindeschaft
- 17: Kopf
- 18: Gelenkelement
- 19: Träger
- 20: Zylinderumfangsfläche
- 21: Elektromotor
- 22: Abtriebelement
- 23: Kopf
- 24: Pfannenaufnahme
- 25: Verstellschlitten
- 26: Außenseite
- 27: Gewinde
- 28: Schelle
- 29: Lageröffnung
- 30: Innenseite
- 31: Profilierung
- 32: Ritzel
- 33: Anschlag
- 34: Verstellweg
- 35: Rutschkupplung
- 36: Ausleger
- 37: Verstellhülse
- 38: Außenseite
- 39: Innenseite
- 41: Gehäuse

- V: Verstellrichtung (Axialrichtung)
- F1: erste Verstellkraft
- F2: zweite Verstellkraft
- F3: dritte Verstellkraft

## Patentansprüche

1. Scheinwerfer für Kraftfahrzeuge mit einem Gehäuse (41) enthaltend ein erstes Lichtmodul (1) und ein zweites Lichtmodul (2), eine manuell betätigbare erste Einstellvorrichtung (10) zur Einstellung des ersten Lichtmoduls (1) und des zweiten Lichtmoduls (2) um eine horizontale oder vertikale Achse und eine elektrisch betätigbare zweite Einstellvorrichtung (11) zur Einstellung des ersten Lichtmoduls (1) um eine horizontale oder vertikale Achse, wobei die erste Einstellvorrichtung (10) und die zweite Einstellvorrichtung (11) dem ersten Lichtmodul (1) zugeordnet sind mit einem zwischen der ersten Einstellvorrichtung (10) und dem zweiten Lichtmodul (2) verlaufenden Koppelelement (7), so dass bei Verschwenken des ersten Lichtmoduls (1) das zweite Lichtmodul (2) mit verschwenkt wird, dass die erste Einstellvorrichtung (10) ein senkrecht zu einer Verstellrichtung (V) angeordnetes Zahnrad (13) aufweist, an das ein Werkzeug angreifbar ist, dass die zweite Einstellvorrichtung (11) einen Elektromotor (21) mit einem Abtriebelement (22) aufweist, das koaxial zu dem Zahnrad (13) verläuft und mit dem ersten Lichtmodul (1) koppelbar ist, **dadurch gekennzeichnet,**
- **dass** das Zahnrad (13) mit einer koaxial zu dem Zahnrad (13) angeordneten und axialfest gelagerten Verstellhülse (14) verbunden ist,
- **dass** die Verstellhülse (14) eine Umfangsfläche aufweist, deren Innenseite (30) derart zumindest in Umfangsrichtung formschlüssig mit einem axial verschiebbaren Verstellbolzen (15) verbunden ist, dass durch Drehen der Verstellhülse (14) eine lineare erste Verstellkraft (F1) auf ein mit dem ersten Lichtmodul (1) verbundenes Gelenkelement (18) übertragen wird,
- **dass** die Umfangsfläche der Verstellhülse (14) eine Außenseite (26) aufweist, die derart formschlüssig mit einem Verstellschlitten (25) verbunden ist, dass durch Verdrehen der Verstellhülse (14) eine lineare zweite Verstellkraft (F2) auf das Koppelelement (7) übertragen wird und
- **dass** der Verstellbolzen (15) axial verschieblich innerhalb der Verstellhülse (14) zwischen dem Gelenkelement (18) und dem Abtriebelement (22) angeordnet ist, derart, dass durch lineare Verstellung des Abtriebelementes (22) über den Verstellbolzen (15) eine lineare dritte Verstellkraft (F3) auf das mit dem ersten Lichtmodul (1) verbundene Gelenkelement (18) übertragen wird.

2. Scheinwerfer nach Anspruch 1, **dadurch gekennzeichnet, dass** die Außenseite (26) der Verstellhülse (14) über einen Gewindeeingriff mit dem Verstellschlitten (25) verbunden ist, wobei der Verstellschlitten (25) über ein Gelenk mit dem Koppelelement (7) verbunden ist.

3. Scheinwerfer nach Anspruch 1 oder 2, **dadurch gekennzeichnet, dass** die Verstellhülse (14) an mindestens einem Ende einen Anschlag (33) aufweist zur Begrenzung des Verstellweges (34) des Verstellschlittens (25).

4. Scheinwerfer nach einem der Ansprüche 1 bis 3, **dadurch gekennzeichnet, dass** die Verstellhülse (14) über eine Rutschkupplung (35) mit dem Zahnrad (13) verbunden ist.

5. Scheinwerfer nach Anspruch 3, **dadurch gekennzeichnet, dass** die Rutschkupplung (35) federnde Ausleger (36) aufweist, die in Umfangsrichtung verteilt um einen dem Elektromotor (21) zugewandten Rand der Verstellhülse (14) angeformt sind.

6. Scheinwerfer nach einem der Ansprüche 1 bis 5, **dadurch gekennzeichnet, dass** an der Verstellhülse (14) Federelemente angeformt sind zur Abstützung der Verstellhülse (14) über das Zahnrad (13) an dem feststehenden Träger (19).

7. Scheinwerfer nach einem der Ansprüche 1 bis 6, **dadurch gekennzeichnet, dass** an dem Verstellschlitten (25) Federelemente angeformt sind zur Abstützung desselben an einem Gehäuse.

8. Scheinwerfer nach einem der Ansprüche 1 bis 7, **dadurch gekennzeichnet, dass** die Innenseite (30) der Verstellhülse (14) eine Profilierung (31) aufweist, die aus einer Mehrzahl von in Axialrichtung verlaufenden Profilierungselementen besteht, die jeweils zumindest bereichsweise mit Spiel in Axialrichtung an einer Außenseite des Verstellbolzens (15) anliegen.

9. Scheinwerfer nach einem der Ansprüche 1 bis 8, **dadurch gekennzeichnet, dass** die Profilierungselemente der Profilierung (31) im Querschnitt eben oder bogenförmig verlaufen.

10. Scheinwerfer nach einem der Ansprüche 1 bis 9, **dadurch gekennzeichnet, dass** der Verstellbolzen (15) über einen Gewindeeingriff mit dem Gelenkelement (18) gekoppelt ist.

11. Scheinwerfer nach einem der Ansprüche 1 bis 10, **dadurch gekennzeichnet, dass** der Verstellbolzen (15) über einen Gewindeschaft (16) mit dem Gelenkelement (18) verbunden ist, wobei der Gewindeschaft (16) in eine Gewindeaufnahme des Verstellbolzens (15) eingreift, und dass der Gewindeschaft (16) an einem freien Ende einen Lagerkopf (17) aufweist, der in einer Pfanne des Gelenkelementes (18) gelagert ist.

12. Scheinwerfer nach einem der Ansprüche 1 bis 11, **dadurch gekennzeichnet, dass** der Elektromotor (21) und das Zahnrad (13) an einem feststehenden Träger (19) gelagert sind.

13. Scheinwerfer nach einem der Ansprüche 1 bis 12, **dadurch gekennzeichnet, dass** das Zahnrad (13) und/oder die Verstellhülse (14, 37) in der Montagestellung einen den Kopf (23) des Abtriebselementes (22) aufnehmende federnde Pfanne (24) umfasst, derart, dass eine für das Lösen der Verbindung zwischen der Pfanne (24) und dem Kopf (23) öffnende Bewegung verhindert wird.

## Claims

1. Headlamps for motor vehicles with a housing (41) containing a first light module (1) and a second light module (2), a manually operable first adjustment device (10) for the adjustment of the first light module (1) and of the second light module (2) around a horizontal or vertical axis and an electrically operable second adjustment device (11) for the adjustment of the first light module (1) around a horizontal or vertical axis, wherein the first adjustment device (10) and the second adjustment device (11) are assigned to the first light module (1) by means of a coupling element (7) running between the first adjustment device (10) and the second light module (2), so that when the first light module (1) is swiveled, the second light module (2) is swiveled with it, the first adjustment device (10) having a toothed wheel (13) giving access to a tool for engagement and being arranged vertically to the adjustment direction (V), and wherein the second adjustment device (11) has an electric motor (21) with an output element (22) running coaxially relative to the toothed wheel (13) and coupleable with the first light module (1),
**characterized in**
- **that** the toothed wheel (13) is connected to an adjustment bush (14) coaxially arranged relative to the toothed wheel (13) and supported in a fixed manner in the axial direction,
- **that** the adjustment bush (14) has a circumferential surface, whose inside (30) is at least in the circumferential direction connected in a positively locking manner to an axially slidable adjusting pin (15) so that by rotating the adjustment bush (14) a linear first adjustment force (F1) is transferred to an articulation element (18) connected to the first light module (1),
- **that** the circumferential surface of the adjustment bush (14) has an outside (26), which is connected in a positively locking manner with a sliding carriage (25) so that by rotation of the adjustment bush (14) a linear second adjustment force (F2) is transferred to the coupling element (7)
and
- **that** the adjusting pin (15) is arranged axially slidable in the adjustment bush (14) between the articulation element (18) and the output element (22), so that by means of a linear displacement of the output element (22)via the adjusting pin (15) a linear third adjustment force (F3)is transferred to the articulation element (18) connected with the first light module (1).

2. Headlamp following claim 1, **characterized in that** the outside (26) of the adjustment bush (14) is connected to the sliding carriage (25) by means of thread engagement, and wherein the sliding carriage (25) is connected to the coupling element (7) by means of an articulated joint.

3. Headlamp following claim 1 or 2, **characterized in that** the adjustment bush (14) has, at least at one end, a limit stop (33) for the limitation of the adjustment travel (34) of the sliding carriage (25).

4. Headlamp following one of the claims 1 to 3, **characterized in that** the adjustment bush (14) is connected to the toothed wheel (13) by means of a friction clutch (35).

5. Headlamp following claim 3, **characterized in that that** the friction clutch (35) has spring-loaded extensions (36), which are distributed in the circumference direction and integrally formed onto the edge of the adjustment bush (14) on a side/edge facing the electric motor (21).

6. Headlamp following one of the claims 1 to 5, **characterized in that** on the adjustment bush (14) spring elements are integrally formed for the support of the adjustment bush (14) via the toothed wheel (13) on the fixed bracket (19).

7. Headlamp following one of the claims 1 to 6, **characterized in that** spring-elements are integrally formed on the sliding carriage (25) for the support of the latter on a housing.

8. Headlamp following one of the claims 1 to 7, **characterized in that** the inside (30) of the adjustment bush (14) has a profile (31) consisting of a multitude of profile elements running in the axial direction, which each have at least partly, and with play, contact in the axial direction to one of the outside surfaces of the adjusting pin (15).

9. Headlamp following one of the claims 1 to 8, **characterized in that** the cross-section of the profile elements of the profile (31) is plane or curved.

10. Headlamp following one of the claims 1 to 9, **characterized in that** the adjusting pin (15) is coupled with the articulation element (18) by means of thread engagement.

11. Headlamp following one of the claims 1 to 10, **characterized in that** the adjusting pin (15) is connected with the articulation element (18) by means of a threaded shank (16), and wherein the threaded shank (16) engages in a threaded receiver of the adjusting pin (15), and wherein the threaded shank (16) has on a free end a ball head (17) being supported in a socket of the articulated element (18).

12. Headlamp following one of the claims 1 to 11, **characterized in that** the electric motor (21) and the toothed wheel (13) are supported by a fixed bracket (19).

13. Headlamp following one of the claims 1 to 12, **characterized in that** in the assembled position the toothed wheel (13) and/or the adjustment bush (14, 37) encompasses a spring-loaded socket (24) receiving the head (23) of the output element (22) in a manner that prevents an opening movement which would release the connection between the socket (24) and the head (23).

## Revendications

1. Projecteur pour véhicules automobiles avec un boîtier (41) contenant un premier module de lumière (1) et un deuxième module de lumière (2), un premier dispositif de réglage (10) manuel pour régler le premier module de lumière (1) et le deuxième module de lumière (2) autour d'un axe horizontal ou vertical et un deuxième dispositif de réglage (11) électrique pour régler le premier module de lumière (1) autour d'un axe horizontal ou vertical, le premier dispositif de réglage (10) et le deuxième dispositif de réglage (11) étant attribués au premier module de lumière (1) avec un élément de couplage (7) entre le premier dispositif de réglage (10) et le deuxième module de lumière (2), de sorte que lors du pivotement du premier module de lumière (1) le deuxième module de lumière (2) pivote également, que le premier dispositif de réglage (10) présente une roue dentée (13) disposée perpendiculaire à une direction de réglage (V) sur laquelle un outil peut être mis, que le deuxième dispositif de réglage (11) présente un moteur électrique (21) avec un élément de mouvement (22) déposé de manière coaxiale par rapport à la roue dentée (13) et pouvant être couplé avec le premier module de lumière (1), **caractérisé en ce**
- **que** la roue dentée (13) est reliée à une douille de réglage (14) disposée de manière coaxiale à la roue dentée (13) et axialement fixe,
- **que** la douille de réglage (14) présente une surface périphérique dont le côté intérieur (30) est solidaire au moins en direction périphérique avec un goujon de réglage (15) déplaçable axialement de telle manière qu'en tournant la douille de réglage (14) un premier effort linéaire (F1) soit transmis sur un élément d'articulation (18) relié avec le premier module de lumière (1),
- **que** la surface périphérique de la douille de réglage (14) présente un côté extérieur (26) qui est solidaire avec un chariot de réglage (25) de telle manière qu'en tournant la douille de réglage (14) un deuxième effort linéaire (F2) soit transmis sur un élément de couplage (7) et
- **que** le goujon de réglage (15) est disposé de façon axialement déplaçable à l'intérieur de la douille de réglage (14) entre l'élément d'articulation (18) et l'élément de mouvement (22) de telle manière que par le réglage linéaire de l'élément de mouvement (22) au moyen du goujon de réglage (15) un troisième effort linéaire (F3) soit transmis sur un élément d'articulation (18) relié avec le premier module de lumière (1).

2. Projecteur selon la revendication 1, **caractérisé en ce que** le côté extérieur (26) de la douille de réglage (14) est relié au moyen d'un filetage avec le chariot de réglage (25), le chariot de réglage (25) étant relié avec l'élément de couplage (7) à l'aide d'une articulation.

3. Projecteur selon la revendication 1 ou 2, **caractérisé en ce que** la douille de réglage (14) présente une butée (33) sur au moins un bout pour limiter la course de réglage (34) du chariot de réglage (25).

4. Projecteur selon une des revendications 1 à 3, **caractérisé en ce que** la douille de réglage (14) est reliée avec la roue dentée (13) au moyen d'un couple de débrayage (35).

5. Projecteur selon la revendication 3, **caractérisé en ce que** le couple de débrayage (35) présente des bras à ressort (36) qui sont moulés autour d'un bord de la douille de réglage (14) dirigé vers le moteur électrique (21) et qui sont distribués en direction périphérique.

6. Projecteur selon une des revendications 1 à 5, **caractérisé en ce que** les éléments à ressort sont moulés sur la douille de réglage (14) pour appuyer la douille de réglage (14) à travers la roue dentée (13) sur le support fixe (19).

7. Projecteur selon une des revendications 1 à 6, **caractérisé en ce que** les éléments à ressort sont moulés sur le chariot de réglage (25) pour appuyer celui-ci sur un boîtier.

8. Projecteur selon une des revendications 1 à 7, **caractérisé en ce que** le côté intérieur (30) de la douille de réglage (14) présente un profilage (31) qui consiste en une majorité d'éléments de profilage en direction axiale qui s'appuient au moins partiellement avec jeu en direction axiale sur le côte extérieur du goujon de réglage (15).

9. Projecteur selon une des revendications 1 à 8, **caractérisé en ce que** les éléments de profilage du profilage (31) s'étendent en section de manière plane ou sous forme d'un arc.

10. Projecteur selon une des revendications 1 à 9, **caractérisé en ce que** le goujon de réglage (15) est couplé avec l'élément d'articulation (18) au moyen d'un filetage.

11. Projecteur selon une des revendications 1 à 10, **caractérisé en ce que** le goujon de réglage (15) est relié à l'élément d'articulation (18) à travers d'une queue filetée (16), la queue filetée (16) s'engrenant dans un logement fileté du goujon de réglage (15) et que la queue filetée (16) présente une tête du palier (17) sur un bout libre qui est montée sur un boîtier de rotule de l'élément d'articulation (18).

12. Projecteur selon une des revendications 1 à 11, **caractérisé en ce que** le moteur électrique (21) et la roue dentée (13) sont montés sur un support fixe (19).

13. Projecteur selon une des revendications 1 à 12, **caractérisé en ce qu'**en position de montage la roue dentée (13) et/ou la douille de réglage (14, 37) enrobent le boîtier de rotule (24) élastique recevant la tête (23) de l'élément de mouvement (22) de telle manière qu'un mouvement pour dégager le raccord entre le boîtier de rotule (24) et la tête (23) soit inhibé.
